# EUROPEAN PATENT APPLICATION

(11) **EP 2 180 012 A1**
(43) Date of publication of application: **28.04.2010**
(21) Application number: 08018526.7
(22) Date of filing: 23.10.2008
(51) Int. Cl.: C08G 59/40, C08G 59/56

(54) **Curable epoxy resin and dicyandiamide solution**

(71) Applicant: Hexion Specialty Chemicals Research Belgium S.A., 1348 Ottignies Louvain-la-Neuve (BE)
(72) Inventor: Bossaerts, Jan Dirk, 1348 Ottignies Louvain-la-neuve (BE); Rans, Marc Jozef, 1348 Ottignies Louvain-la-neuve (BE); Ewald, Dirk, 47138 Duisburg-Melderich (DE); Schendzielors, Michael, 47138 Duisburg-Melderich (DE)

(57) **Abstract**

Hardener solution for curable epoxy resin, the hardener comprising dicyandiamide (DICY) dissolved in an amine and essentially free of organic solvents. The hardener solution comprising a liquid aliphatic amine and no more that 15 weight percent of dicyandiamide. The combination of DICY and the aliphatic amines increase the cure speed. The formulations are especially suitable in continuous winding and of those used for the impregnation of glass and/or natural fibres.

## Description

The present invention is concerned with a hardener solution for curable epoxy resin, the hardener comprising dicyandiamide (DICY) dissolved in an amine and essentially free of organic solvents. The hardener solution comprising a liquid multifunctional amine and no more than 15 weight percent of dicyandiamide. The combination of DICY and the amines increases the cure speed compared with the pure amine. This solution of DICY is storage-stable and fully compatible with epoxy resins, such formulations are especially suitable in continuous winding and of those which are to be used for the impregnation of glass fibre-reinforced fabrics and natural fibres.

On the basis of the outstanding properties of the amine/DICY curable epoxy formulation, such as high impact strength and abrasion resistance, excellent adhesiveness to most raw materials, as well as a good stability towards water and chemicals, epoxy resins possess numerous possibilities of use and are used, in particular, as coating resins, casting resins and varnishes for printed circuit boards, as well as for adhesives and reinforced plastics.

Epoxy resin mixtures produced often consist of a conventional epoxy resin or epoxy resin mixture, a hardener and possibly a hardening accelerator, as well as a definite amount of a solvent or of a solvent mixture for the adjustment of a definite viscosity or solubility aspects. In many cases dicyandiamide is used as hardener (US 2,637,715 and US 3,391,113), which can possibly contain a hardening accelerator, for example dimethylbenzylamine, 2-methylimidazole or tetraalkylguanidines.

A solvent or solvent mixture which is capable of completely dissolving all the components of the epoxy resin mixture and especially DICY has been developed over the past decades in order to obtain a homogeneous distribution on the fibres to be impregnated. The US 4,621,128 suggested having a combination dimethyformamide a low boiling ketone and/or alcohol to solubilize the DICY has curing agent. Other technologies have used substituted cyanoguanidines (substituted DICY) in order to formulate solvent free systems, as illustrated in US 5,534,565. A more recent publication US 7,217,771 claims compositions containing: (a) a liquid epoxy resin; (b) an aliphatic or cycloaliphatic primary monoamine and/or an aliphatic or cycloaliphatic disecondary diamine; (c) a latent curing agent for the epoxy resin; (d) a photopolymerizable compound; and (e) a photoinitiator; the ratio of the number of equivalents of epoxy groups to that of photopolymerizable groups being 1:0.01 to 1:0.7, are suitable as impregnating resins.

The proposed options have several disadvantages, such as the use of toxic solvent, or the use of more sophisticated chemicals or formulations, therefore the industry is still looking for simple formulations based on DICY and epoxy resins applicable to fibre impregnation.

Therefore, it is an object of the present invention to provide a hardener solution based on amine and dicyandiamide (DICY) which has an especially good dissolving ability for and compatibility with the epoxy resin mixture.

Thus, according to the present invention, the curable epoxy resin formulation comprises :
(a) 100 parts of liquid epoxy resin or a blend of epoxy resins
(b) 10 to 90 phr (part by hundred resin) of a curing agent which comprising 50 parts by weight of an amine and 0.2 to 15 parts by weight of dicyandiamide (DICY) in which the amine is selected from diamino cyclohexane (DCH),isophorone diamine (IPDA), diethyltriamine (DETA), aminoethylpiperazine (nAEP)and the like and/or polyether polyamine derived from ethylene or propylene oxide and ammonia such as the commercially available Jeffamine D230 and, Jeffamine T403 (available from Huntsman Chemicals), or a mixture of the above amines,
and optionally an organic solvent or water , additives and fillers. The preferred level of DICY in the curing agent composition is from 0.5 to 5 parts by weight.

Surprisingly, we have found that the hardener solution according to the present invention possesses an outstanding dissolving ability for dicyandiamide not only alone but also in combination with the other components of the epoxy resin mixture. This prevents crystal separation taking place before or during the impregnation of glass-fibre reinforced fabrics or other fibers, as well as during curing thereof.

Furthermore, the hardening times of the formulations containing DICY are surprisingly faster compare with the curing by the above amines used alone. This synergistic effect between the DICY and the amine (or mixture of such an amine) was not foreseeable.

The hardener solution according to the present invention consists essentially of a solution of DICY in an amine or a mixture in ratio 0.2/50 to 15/50. Such DICY solutions were storage stable for months at temperature of 5°C.

As epoxy resin, there can be used all the conventional liquid types which are commercially available such as liquid epoxy resins: Bis phenol A and/or Bis phenol F gycidyl ethers such as form example Epikote 827, Epikote 828LVEL, Epikote 828LVEL, Epikote 862, Epikote 246 and Epikote 816, epoxy resin which could contain reactive diluents such as mono functional: Heloxy Z8, Heloxy 8, Heloxy 9, Heloxy KR and/or di-functional Epikote 877, Heloxy BD, Heloxy HD and/ or multifunctional: Heloxy TP and optionally blended with multifunctional epoxy resins such as for example Epikote 154, Epikote 157, Epikote 164, Epikote 495, Epikote 498, Epon 1074, Epon 1077, DE-TGMDA such as Epikote HPT 1080 (Epikote, Epon , Heloxy are Hexion Specialty Chemicals Inc trade marks).

The hardener solution is added to the epoxy resin, in such an amount that the dicyandiamide content is from to 0.05 to 10% by weight, referred to the total content of epoxy resin and hardener weight.
Even after storing the hardener solution for 6 months at room temperature, no crystallization of the DICY is observed and only a small change of viscosity of the solution is observed, the increase is still within the operating window of the desired applications. Also after curing the impregnated fibres, no DICY crystals can be observed on the applied surface, which would have a disturbing effect.

The following examples are given for the purpose of illustrating the present invention:
Solutions of DICY were prepared in various amines and stored at 5°C to test their stability. None of these exhibited crystallisation or deposit formation over 3 months.

| | |
|---|---|
| DCH | Diamino cyclohexane |
| IPDA | Isophorone diamine |
| DETA | Diethyltriamine |
| nAEP | aminoethylpiperazine |
| D230 | Jeffamine D230 |
| T403 | Jeffamine T403 |

To illustrate the catalytic effect of DICY on amine based epoxy formulations, solutions of 5% and 10% DICY in IPDA were prepared. Their reactivity with Epikote 816 was compared to pure IPDA by characterising the viscosity increase at 60°C. Table 1 show the reactivity increase (as the inverted time to reach various target viscosities) with DICY concentration.

**Table 1: Reactivity of Eikote 828-IPDA formulations catalysed with DICY (DICY as % m:m on IPDA).**

| [DICY] | **1/time (h-1) to reach target viscosity (mPa.s)** | | | | |
|---|---|---|---|---|---|
| in IPDA | 100 | 200 | 1000 | 2000 | 10000 |
| 0% | 5.83 | 4.20 | 2.70 | 2.36 | 1.83 |
| 5% | 19.22 | 12.78 | 6.45 | 5.22 | 3.58 |
| 10% | 36.38 | 21.75 | 8.78 | 6.63 | 4.10 |

The reactivity is shown as inverted time to reach various target viscosities.

If translated in a graphical representation these data illustrate the catalytic effect of DICY as a nearly linear relationship between DICY concentration and reactivity.

Another example is the acceleration of stoichioemetric formulations consisting of Epikote 828 and Jeffamine D230 by adding catalytic amounts of DICY. Table 2 shows the reactivity characterised as the inverted time to maximum temperature in semi-adiabatic exotherm measurements conducted on thermally insulated samples of 100g at 30°C.

**Table 2: Reactivity of Epikote 828-Jeffamine D230 formulations catalysed with DICY (DICY as % m:m on Jeffamine D230)**

| [DICY] | 1/tₚₑₐₖin h⁻¹ |
|---|---|
| 0.0% | 0.17 |
| 1.0% | 0.25 |
| 1.1% | 0.29 |
| 1.2% | 0.31 |
| 1.3% | 0.38 |
| 2.0% | 0.46 |
| 5.0% | 1.02 |

## Claims

1. A hardener solution for epoxy resin composition, based on an amine and dicyandiamide, which comprises: 50 parts by weight of an amine and 0.2 to 15 parts by weight of dicyandiamide

2. The composition of claim 1 **characterized in that** the amine is selected from alicyclic amines, polyamines, and the like and/or polyether polyamine derived from ethylene or propylene oxide and ammonia or a mixture of the above amines.

3. The composition of claim 2 **characterized in that** it comprises isophorone diamine.

4. A curable epoxy resin composition comprising the hardener of claim 1, liquid epoxy resins and optionally a solvent, additives and fillers.

5. The curable composition of claim 4 **characterized in that** the hardener (a) and the epoxy resin (b) are used in the ratio:
(a) 100 part of a liquid epoxy resin or a blend of epoxy resins
(b) 10 to 90 phr (part by hundred resin) of a curing agent which comprising 50 parts by weight of an amine and 0.2 to 15 parts by weight of dicyandiamide (DICY) in which the amine is selected from list of claim 2.

6. The curable composition of claims 4 and 5 **characterized in that** the epoxy resin is selected from Bis phenol A and/or Bis phenol F gycidyl ethers, which could contain mono and/or di-functional and/or multifunctional reactive diluents, and/or multifunctional epoxy resins.

7. The curable composition of claims 4 to 6 **characterized in that** no organic solvent is present.

8. The curable composition of claims 4 to 6 **characterized in that** the solvent is water.

9. The process for producing a resin impregnated fibres comprising the curable composition of claims 4 to 8.

10. The process of claim 9 **characterized in that** the resin impregnated fibre is a filament winding technique.

11. A composite object made of fibres according to claims 9 or 10.
